# EUROPÄISCHE PATENTANMELDUNG

(11) **EP 2 281 425 A2**
(43) Veröffentlichungstag der Anmeldung: **09.02.2011**
(21) Anmeldenummer: 10170085.4
(22) Anmeldetag: 20.07.2010
(51) Int. Cl.: A01B 29/04

(54) **Packerwalzenanordnung**

(30) Priorität: 27.07.2009 DE 202009010189 U
(71) Anmelder: Treffler, Paul, 86554 Pöttmes-Echsheim (DE)
(72) Erfinder: Treffler, Paul, 86554 Pöttmes-Echsheim (DE)
(74) Vertreter: Charrier, Rapp & Liebau

(57) **Zusammenfassung**

Die Erfindung betrifft einen Packerwalzenanordnung mit einer an einem Tragrahmen (3) drehbar gelagerten Packerwalze (1), die mehrere in Achsrichtung der Packerwalze (1) voneinander beabstandete Ringe (9) enthält, wobei der Packerwalze (1) eine drehbar gelagerte Nachlaufwalze (2) mit mehren in Achsrichtung der Nachlaufwalze (2) voneinander beabstandeten und zwischen die Ringe (9) der Packerwalze (1) eingreifenden Scheiben (12) nachgeordnet ist.

## Beschreibung

Die Erfindung betrifft eine Packerwalzenanordnung für ein Bodenbearbeitungsgerät nach dem Oberbegriff des Anspruchs 1.

Eine derartige Packerwalzenanordnung wird z.B. an einem Grubber oder einem anderen Bodenbearbeitungsgerät zur Rückverfestigung des zuvor aufgerissenen oder anderweitig bearbeiteten Bodens eingesetzt. Aus der DE 299 07 668 U1 ist eine Packerwalze bekannt, die aus mehreren parallel nebeneinander angeordneten Laufringen besteht. Bei derartigen offenen Packerwalzen ergibt sich oftmals das Problem, dass diese durch das zuvor aufgebrochene Erdreich verstopfen, wodurch ihre Funktionsweise beeinträchtigt wird. Daher werden an den Laufringen oftmals gesonderte Abstreifeinrichtungen angebracht, die jedoch nur eine beschränkte Reinigungswirkung aufweisen.

Aufgabe der Erfindung ist es, eine Packerwalzenanordnung zu schaffen, die eine verbesserte Reinigungswirkung aufweist.

Diese Aufgabe wird durch eine Packerwalzenanordnung mit den Merkmalen des Anspruchs 1 gelöst. Zweckmäßige Ausgestaltungen und vorteilhafte Weiterbildungen der Erfindung sind in den Unteransprüchen angegeben.

Bei der erfindungsgemäßen Packerwalzenanordnung ist der Packerwalze eine drehbar gelagerte Nachlaufwalze mit mehren in Achsrichtung der Nachlaufwalze voneinander beabstandeten und zwischen die Ringe der Packerwalze eingreifenden Scheiben nachgeordnet. Durch die ineinander greifenden Walzen reinigen sich diese gegenseitig, wodurch ein weitgehend verstopfungsfreier Betrieb gewährleistet ist. Durch die gute Selbstreinigung kann die Packerwalzenanordnung auch bei sehr hohen und sperrigen Ernterückständen, z.B. Lagergetreide bzw. Körnermaisstroh, eingesetzt werden. Aufgrund der Ausführung als Doppelringpackerwalze wird außerdem eine sehr gute Rückverfestigung und Seitenführung am Hang erreicht.

In einer besonders zweckmäßigen Ausführung können die Packerwalze und die Nachlaufwalze zwischen zwei pendelnd gelagerten Lagerplatten an Endstützen des Tragrahmens drehbar gelagert sein.

In einer festigungstechnisch vorteilhaften und kostengünstigen Bauweise sind die Scheiben der Nachlaufwalze zusammen mit den Speichen z.B. durch ein Laserstrahlschneidverfahren aus einem Stahlblech ausgeschnitten. Die Ringe der Packerwalze sind z.B. aus einen gebogenen Vierkantrohr gefertigt und werden über Speichen an ein vorderes Tragrohr angeschweißt.

Weitere Besonderheiten und Vorzüge der Erfindung ergeben sich aus der folgenden Beschreibung eines bevorzugten Ausführungsbeispiels anhand der Zeichnung. Es zeigen:
- **Figur 1**: eine erfindungsgemäße Packerwalzenanordnung mit einer vorderen Packerwalze und einer hinteren Nachlaufwalze in einer Perspektive;
- **Figur 2**: eine Detailansicht der vorderen Packerwalze und
- **Figur 3**: eine Detailansicht der hintern Nachlaufwalze.

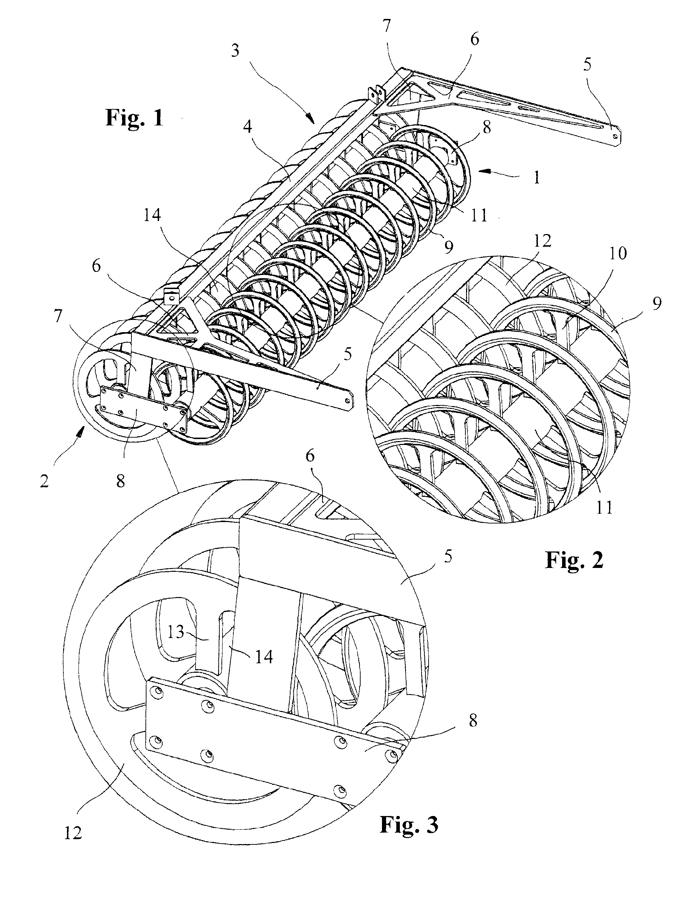

In Figur 1 ist eine an einem Grubber oder einem anderen Bodenbearbeitungsgerät befestigbare Packerwalzenanordnung für die Rückverfestigung des Bodens nach einer Bodenbearbeitung in einer Perspektive gezeigt. Die gezeigte Packerwalzenanordnung enthält eine in Transportrichtung vordere Packerwalze 1 und eine in Transportrichtung hintere Nachlaufwalze 2, die an einem Tragrahmen 3 drehbar gelagert sind.

Der Tragrahmen 3 besteht aus einem hinteren Querträger 4 und zwei in Längsrichtung verlaufenden Stegen 5, über welche die Packerwalzenanordnung z.B. an dem Grundrahmen eines Grubbers befestigt werden kann. Im Verbindungsbereich der Stege 5 mit dem hinteren Querträger 4 sind dreieckige Verstärkungsbleche 6 eingeschweißt. Der Tragrahmen 3 enthält an seinem hinteren Ende zwei nach unten ragende Endstützen 7, an deren unteren Ende jeweils eine Lagerplatte 8 pendelnd gelagert ist. Zwischen den beiden Lagerplatten 8 sind die Packerwalze 1 und die Nachlaufwalze 2 drehbar gelagert.

Wie aus Figur 2 hervorgeht, besteht vordere Packerwalze 1 aus mehreren in deren Längsrichtung voneinander beabstandeten, parallelen Ringen 9, die über Speichen 10 an einem vorderen Tragrohr 11 befestigt sind. Die Ringe 9 der vorderen Packerwalze 1 sind aus einem gebogenen Vierkant-Hohlprofil hergestellt, das zu einem Ring gerundet und über die Speichen 10 mit dem vorderen Tragrohr 11 verschweißt ist.

Die Nachlaufwalze 2 besteht aus mehreren in deren Längsrichtung voneinander beabstandeten, parallelen Scheiben 12, die mit Speichen 13 aus einem Stahlblech z.B. durch Laserstrahlschneiden ausgeschnitten an einem hinteren Tragrohr 14 festgeschweißt sind. Die Packerwalze 1 und die Nachlaufwalze 2 sind derart angeordnet, dass deren Tragrohre 11 und 14 parallel zueinander verlaufen und die Scheiben 12 der Nachlaufwalze 2 zwischen die 9 der Packerwalze 1 greifen. Durch die ineinander greifenden Ringe 9 und Scheiben 12 der Packerwalze 1 bzw. Nachlaufwalze 2 wird eine Anhaftung von Erde verhindert und dadurch ein Reinigungseffekt erzielt. Eine besonders gute Reinigungswirkung kann erreicht werden, wenn der Abstand zwischen den Ringen 9 und Scheiben 12 im Bereich von 20 mm liegt.

## Patentansprüche

1. Packerwalzenanordnung mit einer an einem Tragrahmen (3) drehbar gelagerten Packerwalze (1), die mehrere in Achsrichtung der Packerwalze (1) voneinander beabstandete Ringe (9) enthält, **dadurch gekennzeichnet, dass** der Packerwalze (1) eine drehbar gelagerte Nachlaufwalze (2) mit mehren in Achsrichtung der Nachlaufwalze (2) voneinander beabstandeten und zwischen die Ringe (9) der Packerwalze (1) eingreifenden Scheiben (12) nachgeordnet ist.

2. Packerwalzenanordnung nach Anspruch 1, **dadurch gekennzeichnet, dass** die Packerwalze (1) und die Nachlaufwalze (2) zwischen zwei pendelnd gelagerten Lagerplatten (8) an Endstützen (7) des Tragrahmens (3) drehbar gelagert sind.

3. Packerwalzenanordnung nach Anspruch 1 oder 2, **dadurch gekennzeichnet, dass** die Scheiben (12) der Nachlaufwalze (2) zusammen mit den Speichen (13) aus einem Stahlblech ausgeschnitten sind.

4. Packerwalzenanordnung nach Anspruch 3, **dadurch gekennzeichnet, dass** die Scheiben (12) der Nachlaufwalze (2) über die Speichen (13) an einem hinteren Tragrohr (14) befestigt sind.

5. Packerwalzenanordnung nach Anspruch 4, **dadurch gekennzeichnet, dass** die Ringe (9) der Packerwalze (1) über Speichen (10) an einem vorderen Tragrohr (11) befestigt sind.

6. Packerwalzenanordnung Anspruch 5, **dadurch gekennzeichnet, dass** das vordere Tragrohr (14) und das hintere Tragrohr (14) zueinander parallel und in Transportrichtung voneinander beabstandet an dem Tragrahmen (1) angeordnet sind.

7. Packerwalzenanordnung nach einem der Ansprüche 1 bis 6, **dadurch gekennzeichnet, dass** der Tragrahmen (1) einen hinteren Querträger (4) und zwei in Längsrichtung verlaufende Stege (5) zur Befestigung an einem Grundrahmen eines Bodenbearbeitungsgeräts enthält.

8. Packerwalzenanordnung nach Anspruch 7, **dadurch gekennzeichnet, dass** im Verbindungsbereich des Querträgers (4) mit den Stegen (5) Verstärkungsbleche (6) angeordnet sind.
